# EUROPEAN PATENT SPECIFICATION

(11) **EP 3 654 708 B1**
(45) Date of publication and mention of the grant of the patent: **05.10.2022**
(21) Application number: 17917575.7
(22) Date of filing: 10.07.2017
(51) Int. Cl.: H04L 5/00, H04W 72/04, H04W 16/28, H04W 72/12, H04L 25/00

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 20.05.2020
(73) Proprietor: NTT DOCOMO, INC., Chiyoda-ku Tokyo 100-6150 (JP)
(72) Inventor: MOROGA, Hideyuki, Tokyo 1006150 (JP); TAKEDA, Kazuaki, Tokyo 1006150 (JP); SAITO, Keisuke, Tokyo 1006150 (JP); NAGATA, Satoshi, Tokyo 1006150 (JP)
(74) Representative: Hoffmann Eitle
(86) International application number: PCT/JP2017/025188
(87) International publication number: WO 2019/012596

(56) References cited:
- EP-A1- 2 830 377
- WO-A1-2010/082319
- JP-A- 2011 004 183
- JP-A- 2016 521 085
- US-A1- 2016 028 521
- "Proposals for 5G Technologies", 3GPP RAN workshop on 5G, RWS-150014, 1 September 2015 (2015-09-01), XP051044962, Retrieved from the Internet: URL:http://www.3gpp.org/ftp/workshop/2015- 09-17_18_RAN_5G/Docs/RWS-150014.zip
- "Considerations on waveform selection for new radio interface", 3GPP TSG-RAN WG1#84b R1-162384, 2 April 2016 (2016-04-02), XP051080163, Retrieved from the Internet: URL:http://www.3gpp.org/ftp/tsg_ran/WG1_RL 1/TSGR1_84b/Docs/R1-162384.zip

## Description

### Technical Field

The present invention relates to a user terminal and a radio communication method in a next-generation mobile communication system.

### Background Art

Long Term Evolution (LTE) has been specified for achieving a higher data rate, lower latency, and the like in a Universal Mobile Telecommunication System (UMTS) network (see Non-Patent Literature (hereinafter referred to as "NPL") 1). Future systems of LTE (called LTE-Advanced (LTE-A), Future Radio Access (FRA), 5th generation mobile communication system (5G), 5G plus (5G+), New Radio Access Technology (New-RAT), or the like) have also been studied for achieving a broader bandwidth and a higher speed based on LTE.

Orthogonal Frequency Division Multiplexing (OFDM) is adopted as a downlink communication system in the specification of LTE. In LTE, a reference signal is mapped to subcarriers of the frequency domain (NPL 2).

In the next-generation mobile communication system (for example, 5G), beamforming (BF) by the use of massive Multiple Input Multiple Output (MIMO) techniques in which a large number of antenna elements (for example, 100 elements or more) are used in a high frequency band (for example, 5 GHz or higher) has been studied to further increase the speed and reduce the interference in signal transmission.

It is desirable in the next-generation mobile communication system that the Peak to Average Power Ratio (PAPR) be reduced. Therefore, a single carrier transmission system with a lower PAPR may be adopted in 5G as the downlink communication system. In the case of the single carrier transmission system, it is necessary to map the reference signal in the time domain.

Moreover, in a high-frequency band, it is also thinkable to perform directional transmission (precoding) using, for the reference signal, an antenna port common between the reference signal and a physical control channel/physical data channel. Accordingly, it is necessary in the single carrier transmission system to map the reference signal taking into consideration antenna port assignment.

### Citation List

### Non-Patent Literature

NPL 1
   3GPP TS 36.300 v13.4.0, "Evolved Universal Terrestrial Radio Access (E-UTRA) and Evolved Universal Terrestrial Radio Access Network (E-UTRAN); Overall description; Stage 2 (Release 13)," June 2016
NPL 2
   3GPP TS 36.211 v14.2.0, "Evolved Universal Terrestrial Radio Access (E-UTRA); Physical channels and modulation (Release 14)," March 2017

US 2016/028521 A1, 28 January 2016, relates to a base station that communicates with a terminal by using a resource element constituted by a subcarrier and an OFDM symbol. The base station includes a PDSCH generator, a reference signal generator, and a transmitter. The PDSCH generator generates a PDSCH for a terminal. The reference signal generator generates a first demodulation reference signal or a second demodulation reference signal which is a demodulation reference signal associated with the PDSCH and is enabled to be multiplexed between a plurality of antenna ports. The transmitter transmits the PDSCH and transmits the first demodulation reference signal or the second demodulation reference signal selected based on a configuration for the terminal.

EP 2 830 377 A1, 28 January 2015, describes a radio base station apparatus provided with a scheduling section that selects a radio resource for a PUCCH corresponding to a PDCCH that is multiplexed over a control region in a subframe and an enhanced PDCCH that is frequency-division-multiplexed with a downlink data signal over a data region in the subframe, and a transmission section that transmits a PDCCH signal and an enhanced PDCCH signal to a user terminal with information that can identify the radio resource for the PUCCH selected in this scheduling section. The scheduling section selects a radio resource that does not overlap with the radio resource for the PUCCH corresponding to the PDCCH signal, as the radio resource for the PUCCH corresponding to the enhanced PDCCH signal.

### Summary of Invention

### Technical Problem

In a case where an antenna port common between the physical control channel/physical data channel and the reference signal is used in the single carrier transmission system, overhead increases when the reference signal is transmitted for each user.

One object of one aspect of the present invention is to provide a user terminal and a radio communication method which make it possible to map a reference signal effectively in a single carrier transmission system.

### Solution to Problem

The object of the invention is achieved by the subject-matter of the independent claims. Advantageous embodiments are defined in the dependent claims. Further examples are provided for facilitating the understanding of the invention. A user terminal according to one aspect includes: a reception section that receives a downlink signal transmitted from a radio base station in a single carrier transmission system; a channel estimation section that performs channel estimation using a reference signal included in the downlink signal; and a demodulation and decoding section that demodulates and decodes a downlink control signal and a downlink data signal included in the downlink signal using a result of the channel estimation, in which a plurality of the downlink control signals for a respective plurality of user terminals including the user terminal, a plurality of the downlink data signals for the respective plurality of user terminals, a first reference signal referred to when the plurality of the downlink control signals are demodulated, and a second reference signal referred to when the plurality of the downlink data signals are demodulated are mapped in a time domain in the downlink signal, at least one of the first reference signal and the second reference signal is common to the plurality of user terminals, and the demodulation and decoding section demodulates and decodes the downlink control signal addressed to the user terminal using a channel estimation result based on the first reference signal, and demodulates and decodes the downlink data signal addressed to the user terminal using a channel estimation result based on the second reference signal and using the downlink
control signal addressed to the user terminal.

A radio transmission method according to one aspect includes: receiving a downlink signal transmitted from a radio base station in a single carrier transmission system; performing channel estimation using a reference signal
included in the downlink signal; and demodulating and decoding a downlink control signal and a downlink data signal included in the downlink signal using a result of the channel estimation, in which a plurality of the downlink control signals for a respective plurality of user terminals, a plurality of the downlink data signals for the respective plurality of user terminals, a first reference signal referred to when the plurality of the downlink control signals are demodulated, and a second reference signal referred to when the plurality of the downlink data signals are demodulated are mapped in a time domain in the downlink signal, at least one of the first reference signal and the second reference signal is common to the plurality of user terminals, the downlink control signal addressed to a corresponding user terminal of the plurality of user terminals is demodulated and decoded using a channel estimation result based on the first reference signal, and the downlink data signal addressed to the corresponding user terminal is demodulated and decoded using a channel estimation result based on the second reference signal and using the downlink control signal addressed to the corresponding user terminal.

### Advantageous Effects of Invention

According to one aspect of the present invention, it is possible to map a reference signal effectively in a single carrier transmission system.

### Brief Description of Drawings

FIG. 1 illustrates an example of entire configuration of a radio base station according to one embodiment of the present invention;
FIG. 2 illustrates an example of entire configuration of a user terminal according to one embodiment of the present invention;
FIG. 3 illustrates Example 1 of reference signal mapping processing according to one embodiment of the present invention;
FIG. 4 illustrates Example 2 of the reference signal mapping processing according to one embodiment of the present invention;
FIG. 5 illustrates Example 2 (Variation 1) of the reference signal mapping processing according to one embodiment of the present invention;
FIG. 6 illustrates Example 2 (Variation 2) of the reference signal mapping processing according to one embodiment of the present invention;
FIG. 7 illustrates Example 2 (Variation 3) of the reference signal mapping processing according to one embodiment of the present invention;
FIG. 8 illustrates Example 3 of the reference signal mapping processing according to one embodiment of the present invention;
FIG. 9 illustrates Example 4 of the reference signal mapping processing according to one embodiment of the present invention;
FIG. 10 illustrates an example of internal configuration of a physical control channel; and
FIG. 11 illustrates an example of hardware configuration of the radio base station and the user terminal according to one embodiment of the present invention.

### Description of Embodiments

One embodiment of the present invention is described below in detail with reference to the accompanying drawings.

### (One Embodiment)

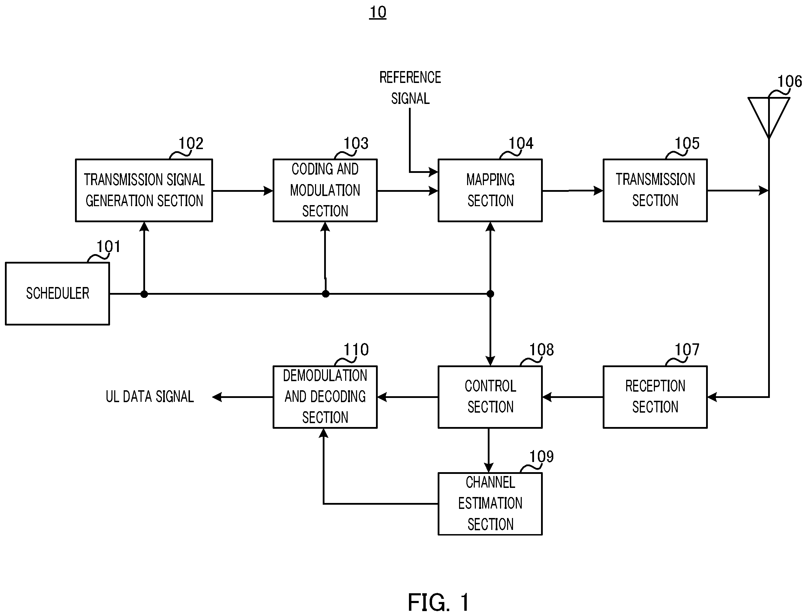

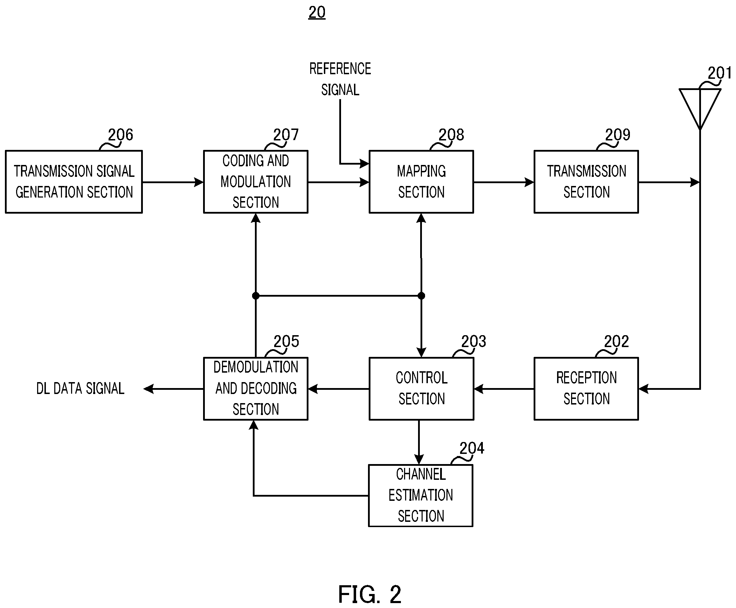

A radio communication system according to the present embodiment at least includes radio base station 10 illustrated in FIG. 1 and user terminal 20 illustrated in FIG. 2. User terminal 20 is connected to radio base station 10.

Radio base station 10 transmits, to user terminal 20, a downlink (DL) control signal using a downlink control channel (e.g., Physical Downlink Control Channel (PDCCH)) and a DL data signal and a reference signal using a downlink data channel (e.g., downlink shared channel (Physical Downlink Shared Channel (PDSCH))) in a single carrier transmission system. User terminal 20 transmits, to radio base station 10, an uplink (UL) control signal using an uplink control channel (e.g., Physical Uplink Control Channel (PUCCH)) and a UL data signal and a reference signal using an uplink data channel (e.g., uplink shared channel (Physical Uplink Shared Channel (PUSCH))) in the single carrier transmission system.

Note that, the downlink channels and uplink channels for radio base station 10 and user terminal 20 to transmit/receive are not limited to the above PDCCH, PDSCH, PUCCH, PUSCH and the like, and may also, e.g., be other channels such as a Physical Broadcast Channel (PBCH), Random Access Channel (RACH), and the like.

Note also that, the single carrier transmission system applied between radio base station 10 and user terminal 20 includes Discrete Fourier Transform (DFT)-Spread-Orthogonal Frequency Division Multiplexing (OFDM) (DFT-S-OFDM).

### <Radio Base Station>

FIG. 1 illustrates an example of entire configuration of radio base station 10 according to the present embodiment. Radio base station 10 illustrated in FIG. 1 is configured to include scheduler 101, transmission signal generation section 102, coding and modulation section 103, mapping section 104, transmission section 105, antenna 106, reception section 107, control section 108, channel estimation section 109, and demodulation and decoding section 110.

Scheduler 101 performs scheduling (e.g., resource allocation and antenna port assignment) of a DL signal (e.g., a DL data signal, DL control signal, reference signal, and/or the like).

Scheduler 101 also performs scheduling (e.g., resource allocation and antenna port assignment) of a UL signal (e.g., a UL data signal, UL control signal, reference signal, and/or the like).

Moreover, scheduler 101 outputs scheduling information indicating a scheduling result to transmission signal generation section 102, mapping section 104, and control section 108.

In addition, scheduler 101 configures MCS (a coding rate, modulation scheme, and/or the like) of the DL data signal and the UL data signal per user terminal 20 based, for example, on channel quality between radio base station 10 and user terminal 20, and outputs MCS information to transmission signal generation section 102 and coding and modulation section 103. As for the MCS, the present invention is not limited to the case where radio base station 10 configures the MCS, but user terminal 20 may also configure the MCS. In the case where user terminal 20 configures the MCS, radio base station 10 only have to receive the MCS information from user terminal 20 (not illustrated).

Transmission signal generation section 102 generates a transmission signal (including the DL data signal and the DL control signal) per user terminal 20. The DL control signal includes Downlink Control Information (DCI) including the scheduling information (e.g., resource allocation information of the DL data signal) or the MCS information output from scheduler 101, for example. Transmission signal generation section 102 outputs the generated transmission signal to coding and modulation section 103.

Based on the MCS information input from scheduler 101, for example, coding and modulation section 103 performs coding processing and modulation processing on the transmission signal input from transmission signal generation section 102. Coding and modulation section 103 outputs the modulated transmission signal to mapping section 104.

Mapping section 104 maps in the time domain the transmission signal input from coding and modulation section 103 based on the scheduling information (e.g., DL resource allocation and/or port assignment) input from scheduler 101. Mapping section 104 also maps the reference signal in the time domain based on the scheduling information. Note that, reference signal mapping processing in the present embodiment will be described in detail later.

Mapping section 104 outputs the mapped DL signal to transmission section 105.

Transmission section 105 performs transmission processing, such as upconversion, amplification, and the like on the DL signal input from mapping section 104, and transmits a radio frequency signal (DL signal) from antenna 106.

Reception section 107 performs reception processing, such as amplification, downconversion, and the like on a radio frequency signal (UL signal) received by antenna 106, and outputs the UL signal to control section 108.

Based on the scheduling information (UL resource allocation and/or port assignment) input from scheduler 101, control section 108 separates (demaps) the UL data signal and the reference signal from the UL signal input from reception section 107. Then, control section 108 outputs the UL data signal to channel estimation section 109.

Channel estimation section 109 performs channel estimation using the reference signal, and outputs a channel estimation value as an estimation result to demodulation and decoding section 110.

Demodulation and decoding section 110 performs, based on the channel estimation value input from channel estimation section 109, demodulation and decoding processing on the UL data signal input from control section 108. Demodulation and decoding section 110 transfers the demodulated UL data signal to an application section (not illustrated). The application section performs processing such as that related to a higher layer above the physical layer or the MAC layer.

### <User Terminal>

FIG. 2 illustrates an example of entire configuration of user terminal 20 according to the present embodiment. User terminal 20 illustrated in FIG. 2 is configured to include antenna 201, reception section 202, control section 203, channel estimation section 204, demodulation and decoding section 205, transmission signal generation section 206, coding and modulation section 207, mapping section 208, and transmission section 209. User terminal 20 performs reception processing of a radio frequency signal received via an antenna port assigned to user terminal 20 itself.

Reception section 202 performs reception processing, such as amplification, downconversion, and the like on the radio frequency signal (DL signal) received by antenna 201, and outputs the DL signal to control section 203. The DL signal includes at least a DL data signal, DL control signal, and reference signal.

Control section 203 separates (demaps) the DL control signal and the reference signal from the DL signal input from reception section 202. Then, control section 203 outputs the DL control signal to demodulation and decoding section 205, and outputs the reference signal to channel estimation section 204.

In addition, based on scheduling information (e.g., DL resource allocation information) input from demodulation and decoding section 205, control section 203 separates (demaps) the DL data signal from the DL signal, and outputs the DL data signal to demodulation and decoding section 205.

Channel estimation section 204 performs channel estimation using the separated reference signal, and outputs a channel estimation value as an estimation result to demodulation and decoding section 205.

Demodulation and decoding section 205 demodulates the DL control signal input from control section 203. In addition, demodulation and decoding section 205 performs decoding processing (e.g., blind detection processing) on the demodulated DL control signal. Demodulation and decoding section 205 outputs, to control section 203 and mapping section 208, the scheduling information (e.g., DL/UL resource allocation, reference signal mapping configuration, and/or the like) obtained by demodulation of the DL control signal and addressed to the corresponding user terminal, and also outputs MCS information for the UL data signal to coding and modulation section 207.

Demodulation and decoding section 205 also performs demodulation and decoding processing on the DL data signal input from control section 203 based on the channel estimation value input from control section 203 and based on the MCS information for the DL data signal included in the DL control signal. In addition, demodulation and decoding section 205 transfers the demodulated DL data signal to an application section (not illustrated). The application section performs processing such as that related to a higher layer above the physical layer or the MAC layer.

Transmission signal generation section 206 generates a transmission signal (including a UL data signal or UL control signal), and outputs the generated transmission signal to coding and modulation section 207.

Based on the MCS information input from demodulation and decoding section 205, for example, coding and modulation section 207 performs coding processing and modulation processing on the transmission signal input from transmission signal generation section 206. Coding and modulation section 207 outputs the modulated transmission signal to mapping section 208.

Mapping section 208 maps the transmission signal input from coding and modulation section 207 in the time domain based on the scheduling information (UL resource allocation) input from demodulation and decoding section 205. Mapping section 208 also maps the reference signal in the time domain based on the scheduling information. Mapping section 208 outputs the mapped UL signal to transmission section 209.

Transmission section 209 performs transmission processing, such as upconversion, amplification, and the like on the UL signal (including at least the UL data signal and reference signal) input from mapping section 208, and transmits a radio frequency signal (UL signal) from antenna 201.

### <Reference Signal Mapping Processing>

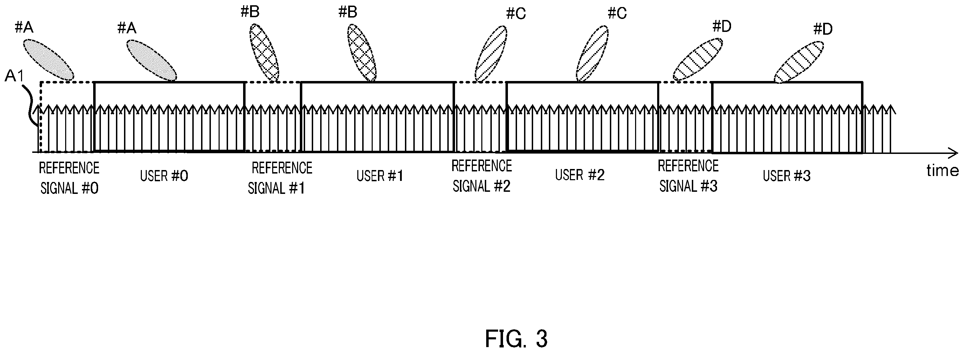

Next, concrete examples of reference signal mapping processing in the present embodiment are described in detail with reference to FIGS. 3 to 9. Note that, the horizontal axis represents the time axis in each of FIGS. 3 to 9. Note also that, arrows A1 in a transmission signal illustrated in each of FIGS. 3 to 9 represent transmission points at which a DL signal is transmitted by a single carrier. The transmission points indicated by arrows A1 may hereinafter be referred to as sample points. The interval between the sample points is "1/system bandwidth," for example. Note that, the transmission points indicated by arrows A1 may also be referred to as subcarriers, tones, resource elements, components, symbols, mini symbols, or samples. That is, the name of the transmission points indicated by arrows A1 is not limited to "sample points." The name is also not limited to those listed above.

### [Example 1]

FIG. 3 illustrates Example 1 of the reference signal mapping processing according to the present embodiment. In Example 1, radio base station 10 maps transmission signals (DL signals) for a respective plurality of user terminals 20 (users #0, #1, #2, and #3 in FIG. 3) in the time domain, and also maps specific reference signals (reference signals #0, #1, #2, and #3 in FIG. 3) in front of the transmission signals addressed to user terminals 20, respectively. Each of the transmission signals includes a physical control channel and a physical data channel.

Additionally, in Example 1, an antenna port common to the transmission signal and the specific reference signal is applied for each of user terminals 20. For example, antenna port #A is applied to reference signal #0 and user #0, antenna port #B is applied to reference signal #1 and user #1, antenna port #C is applied to reference signal #2 and user #2, and antenna port #D is applied to reference signal #3 and user #3 as illustrated in FIG. 3. Beam patterns of antenna ports #A, #B, #C, and #D may differ from one another, or may be the same.

Each of user terminals 20 performs channel estimation using the reference signal transmitted from radio base station 10 and addressed to corresponding user terminal 20, and demodulates and decodes the signal (the physical control channel and physical data channel) addressed to corresponding user terminal 20 using a channel estimation result.

As described above, when the signals addressed to the respective plurality of user terminals 20 are time-division multiplexed and transmitted in the single carrier transmission system, radio base station 10 maps the respective reference signals for the transmission signals addressed respectively to user terminals 20, and applies an antenna port common to the signal and reference signal addressed to each of user terminals 20 in Example 1.

This allows application of the reference signals orthogonal to one another between user terminals 20, resulting in an increase in demodulation accuracy.

### [Example 2]

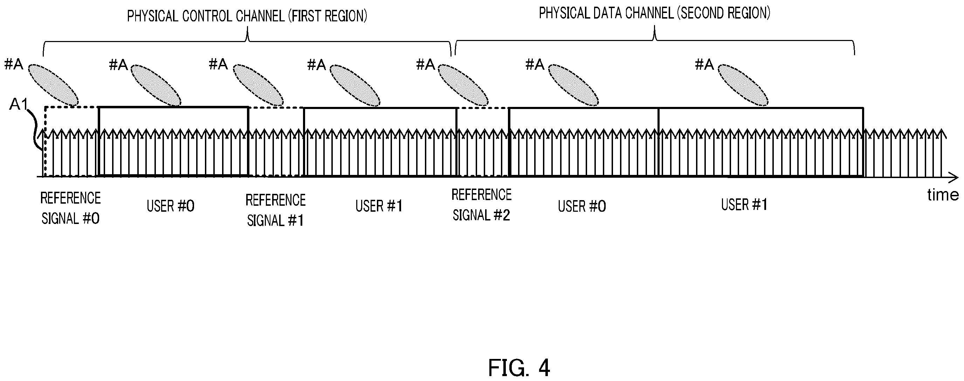

FIG. 4 illustrates Example 2 of the reference signal mapping processing according to the present embodiment. In Example 2, radio base station 10 divides the transmission signals for the respective plurality of user terminals 20 (users #0 and #1 in FIG. 4) between the physical control channel and the physical data channel, and maps the physical control channels for all of user terminals 20 to a first region and then maps the physical data channels for all of user terminals 20 to a second region.

Then, radio base station 10 maps specific first reference signals (signals referred to when the physical control channels are demodulated; reference signals #0 and #1 in FIG. 4) in front of the physical control channels addressed to respective user terminals 20 in the first region, and maps a second reference signal (signal referred to when the physical data channels are demodulated; reference signal #2 in FIG. 4) common to all of user terminals 20 (UE group specific) in front of the physical data channels in the second region.

Moreover, a common antenna port (#A in FIG. 4) is applied for all of the physical control channels, physical data channels, first reference signals, and second reference signal in Example 2.

In addition, the correspondence between each of the physical data channels addressed respectively to user terminals 20 and the second reference signal is indicated in the DCI of each of the physical control channels addressed respectively to user terminals 20.

User terminals 20 perform the channel estimation using the respective first reference signals transmitted from radio base station 10 and addressed to corresponding user terminals 20, and demodulate and decode the physical control channels addressed to corresponding user terminals 20 using channel estimation results. Further, each of user terminals 20 understands the correspondence between each of the physical data channels and the second reference signal, which correspondence is indicated in the DCI of the decoded physical control channel, performs the channel estimation using a corresponding second reference signal, and demodulates and decodes the physical data channel addressed to corresponding user terminal 20 using a channel estimation result and the physical control channel. In the example of FIG. 4, both of users #0 and #1 demodulate and decode the respective physical data channels using the channel estimation result of reference signal #2.

As described above, when the signals addressed to the respective plurality of user terminals 20 are time-division multiplexed and transmitted in the single carrier transmission system, radio base station 10 maps the specific first reference signals for the physical control channels, and maps the common second reference signal for the physical data channels in Example 2.

This allows reduction in overhead due to the reference signal, resulting in improved throughput.

In addition, the common second reference signal is mapped to the front of the physical data channels, so that the channel estimation can be performed first and, consequently, the reception processing time can be reduced.

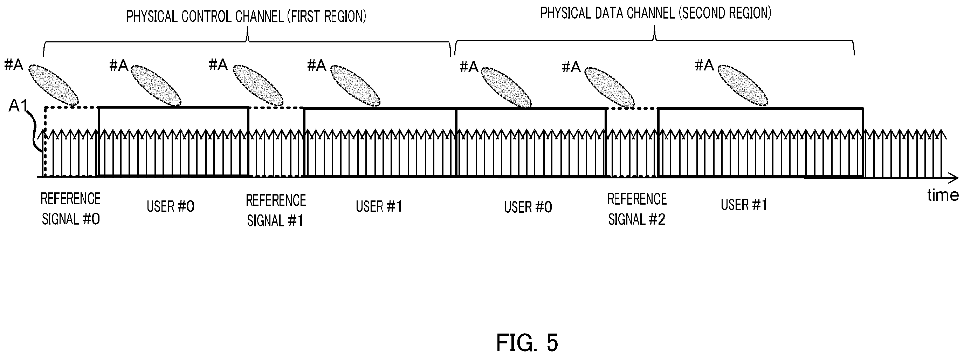

Note that, the second reference signal may also be mapped at the end of the physical data channels in Example 2. Note also that, the second reference signal may also be mapped in the middle of the physical data channels (between the users) like reference signal #2 in FIG. 5. In the example of FIG. 5, both of users #0 and #1 demodulate and decode the respective physical data channels addressed to corresponding user terminals 20 using the channel estimation result of reference signal #2. This makes the physical data channel addressed to user terminal 20 mapped in the latter part less liable to time variation.

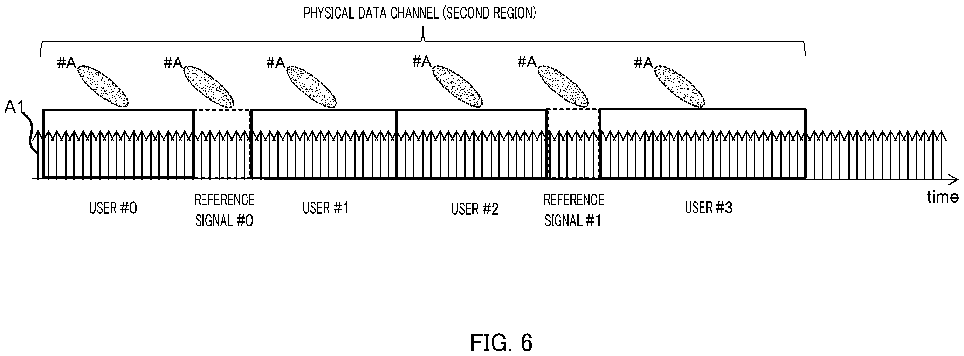

Additionally or alternatively, a plurality of second reference signals may be mapped between the physical data channels as illustrated in FIG. 6. In the example of FIG. 6, users #0 and #1 demodulate and decode the respective physical data channels using the channel estimation result of reference signal #0. Users #2 and #3 demodulate and decode the respective physical data channels using the channel estimation result of reference signal #1. This makes it possible to improve the channel estimation accuracy. Additionally, this makes the physical data channel addressed to user terminal 20 mapped in the latter part less liable to time variation particularly when the number of users is large.

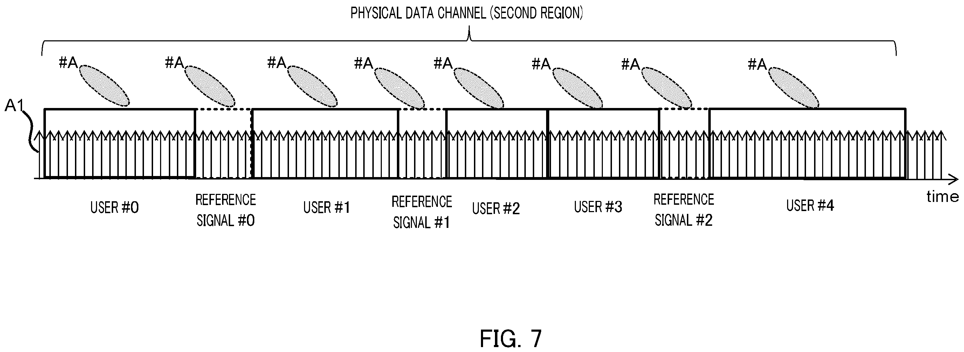

Additionally or alternatively, the second reference signals for the physical data channels may be mapped at regular mapping intervals as illustrated in FIG. 7. This makes it unnecessary for radio base station 10 to indicate the mapping positions of the second reference signals to user terminals 20, resulting in reduced overhead.

Note in this case that, the physical data channels addressed to multiple user terminals 20 may also be mapped between the second reference signals. In the example of FIG. 7, the physical data channels addressed to users #2 and #3 are mapped between reference signals #1 and #2. Users #0 and #1 demodulate and decode the physical data channels using the channel estimation result of reference signal #0. User #2 demodulates and decodes the physical data channel using the channel estimation result of reference signal #1. Users #3 and #4 demodulate and decode the physical data channels using the channel estimation result of reference signal #2.

The specific reference signals for the physical control channels may also be mapped at regular mapping intervals. This makes it unnecessary for radio base station 10 to indicate the mapping positions of the specific reference signals to user terminals 20.

Note that, it is not necessary to apply the same antenna port to all the users in the physical data channel in Example 2, and different antenna ports may also be used. For example, when users #0, #1, #2, and #3 are mapped in one physical data channel, antenna port #A may be assigned to users #0 and #1, and antenna port #B may be assigned to users #2 and #3. In that case, two types of reference signal of reference signal #0 to be transmitted from antenna port #A and of reference signal #1 to be transmitted from antenna port #B are transmitted.

### [Example 3]

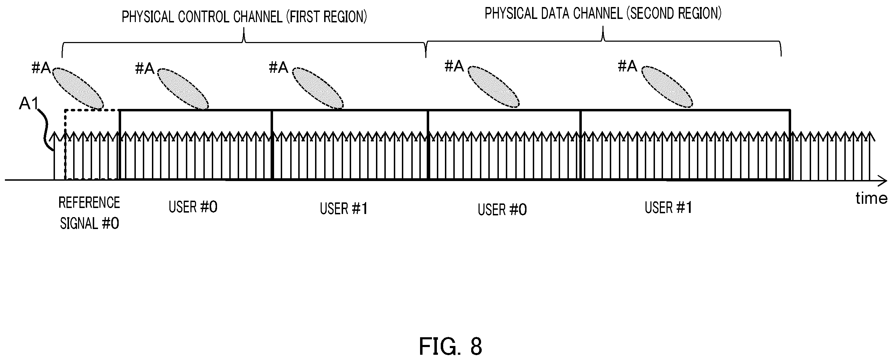

FIG. 8 illustrates Example 3 of the reference signal mapping processing according to the present embodiment. In Example 3, radio base station 10 divides the transmission signals for the respective plurality of user terminals 20 (users #0 and #1 in FIG. 8) between the physical control channel and the physical data channel as in Example 2, and maps the physical control channels for all of user terminals 20 to the first region and then maps the physical data channels for all of user terminals 20 to the second region.

Then, radio base station 10 maps the reference signal (reference signal #0 in FIG. 8) common to all of user terminals 20 (UE group specific reference signal) to the front of the physical control channels in the first region.

Moreover, a common antenna port (#A in FIG. 8) is applied for all of the physical control channels, physical data channels, and reference signal in Example 3.

Each of user terminals 20 performs channel estimation using the common reference signal transmitted from radio base station 10, and demodulates and decodes the physical control channel addressed to corresponding user terminal 20 using a channel estimation result. Further, each of user terminals 20 demodulates and decodes the physical data channel addressed to corresponding user terminal 20 using the channel estimation result and the physical control channel. In the example of FIG. 8, both of users #0 and #1 demodulate and decode the respective physical control channels and the respective physical data channels using the channel estimation result of reference signal #0.

As described above, when the signals addressed to the respective plurality of user terminals 20 are time-division multiplexed and transmitted in the single carrier transmission system, radio base station 10 maps the common reference signal for the physical control channels and the physical data channels in Example 3.

This further reduces the overhead due to the reference signal, resulting in improved throughput.

In addition, the reference signal is mapped to the front of the physical control channels, so that the channel estimation can be performed first and, consequently, the reception processing time can be reduced.

Note that, the reference signal may also be mapped at the end of the physical control channels in Example 3. The reference signal may also be mapped in the middle of the physical control channels (between the users). A plurality of reference signals may also be mapped between the physical control channels. The reference signals for the physical control channels may also be mapped at regular mapping intervals. In this case, the physical control channels addressed to the respective plurality of user terminals 20 may be multiplexed between the reference signals.

Note that, it is not necessary to apply the same antenna port to all the users in the physical control channel/physical data channel in Example 3, but different antenna ports may also be used. For example, when users #0, #1, #2, and #3 are mapped in one physical control channel/physical data channel, antenna port #A may be assigned to users #0 and #1, and antenna port #B may be assigned to users #2 and #3. In that case, two types of reference signal of reference signal #0 to be transmitted from antenna port #A and of reference signal #1 to be transmitted from antenna port #B are transmitted.

### [Example 4]

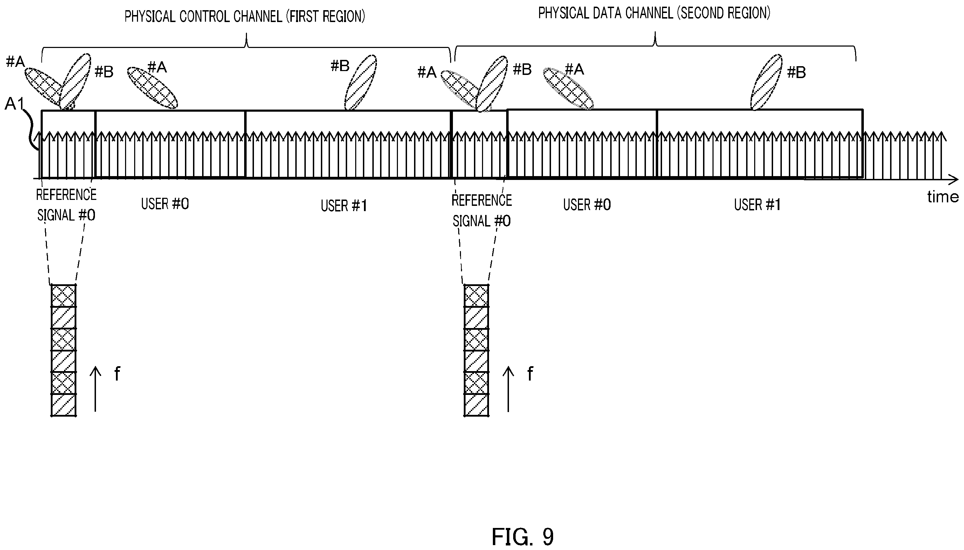

FIG. 9 illustrates Example 4 of the reference signal mapping processing according to the present embodiment. In Example 4, radio base station 10 divides the transmission signals for the respective plurality of user terminals 20 (users #0 and #1 in FIG. 9) between the physical control channel and the physical data channel as in Example 2, and maps the physical control channels for all of user terminals 20 to the first region and then maps the physical data channels for all of user terminals 20 to the second region.

Then, radio base station 10 maps first reference signals specific to respective user terminals 20 to the front of the physical control channels in the first region, and maps second reference signals specific to respective user terminals 20 to the front of the physical data channels in the second region. At this time, the first reference signals are multiplexed in a comb fashion in the frequency direction (are made orthogonal to each other), and the second reference signals are also multiplexed in a comb fashion in the frequency direction (are made orthogonal to each other).

In addition, the correspondence between each of the physical data channels addressed respectively to user terminals 20 and each of the second reference signals is indicated in the DCI of each of the physical control channels addressed respectively to user terminals 20.

As described above, when the signals addressed to the respective plurality of user terminals 20 are time-division multiplexed and transmitted in the single carrier transmission system, radio base station 10 maps the reference signals specific to respective user terminals 20 in a comb fashion for the physical control channels and the physical data channels in Example 4.

This allows assignment of specific antenna ports to respective user terminals 20. This also allows reduction in overhead due to the reference signal, resulting in improved throughput. In the example of FIG. 9, antenna port #A can be applied for the physical control channel, physical data channel, and reference signal of user #0, and antenna port #B can be applied for the physical control channel, physical data channel, and reference signal of user #1.

Note that, the specific reference signals may also be mapped at the end of the physical control channels/physical data channels in Example 3. The specific reference signals may also be mapped in the middle of the physical control channels/physical data channels (between the users). A plurality of reference signals may also be mapped between the physical control channels/physical data channels. The reference signals for the physical control channels/physical data channels may also be mapped at regular mapping intervals.

Additionally or alternatively, in Example 4, only the first specific reference signals which are referred to when the physical control channels are demodulated may be mapped in a comb fashion, or only the second specific reference signals which are referred to when the physical data channels are demodulated may be mapped in a comb fashion.

Note that, Example 4 is also applicable to UL communication.

### [Common to Examples]

The lengths (data sizes) of the transmission signals addressed to respective user terminals 20 are varied depending on the amounts of data in above Examples 1 to 4. Each of the transmission signals includes the physical control channel and the physical data channel. The data sizes are indicated in advance from radio base station 10 to respective user terminals 20.

Additionally or alternatively, the mapping positions and lengths of the reference signals may be defined in the specification to be known to radio base station 10 and user terminal 20 in above Examples 1 to 4. Additionally or alternatively, radio base station 10 may indicate the mapping positions and lengths of the reference signals explicitly or implicitly.

For example, in the case of explicit indication of the mapping positions and lengths of the reference signals, radio base station 10 may indicate the mapping positions and lengths of the reference signals using Downlink Control Information (DCI) of the physical control channel. Additionally or alternatively, radio base station 10 may also indicate the mapping positions and lengths of the reference signals via higher layer signaling, such as Radio Resource Control (RRC) signaling, Medium Access Control (MAC) signaling, and the like. Additionally or alternatively, radio base station 10 may also indicate the mapping positions and lengths of the reference signals using broadcast information, such as Master Information Block (MIB), System Information Block (SIB), and the like.

Additionally or alternatively, in the case of implicit indication of the control channel size, radio base station 10 and terminal 20 may, for example, associate a configuration and the like of a Synchronization Signal (SS), PBCH, SIB, or RACH with the mapping positions and lengths of the reference signals one-to-one. With this configuration, implicit indication of the mapping positions and lengths of the reference signals is achieved using the existing signals, so that no new signaling is necessary for indication of the mapping positions and lengths of the reference signals and the overhead can thus be reduced.

### <Effect of Embodiment>

As described above, the types (specific or common) and mapping positions of the reference signals, the number of reference signals, and/or the like are adaptively controlled in the single carrier transmission system in the present embodiment. Accordingly, the reference signals can be mapped effectively in the single carrier transmission system.

For example, as described in Example 1, radio base station 10 maps the respective reference signals for the transmission signals addressed respectively to user terminals 20 and applies an antenna port common to the signal and reference signal addressed to each of user terminals 20, so that it is possible to apply the reference signals orthogonal to one another between user terminals 20 so as to increase the demodulation accuracy.

Additionally, as described in Example 2, radio base station 10 maps the specific first reference signals for the physical control channels, and maps the common second reference signal for the physical data channels, so that it is possible to reduce the overhead due to the reference signal so as to improve the throughput.

Additionally, as described in Example 3, radio base station 10 maps the common reference signal for the physical control channels and the physical data channels, so that it is possible to further reduce the overhead due to the reference signal so as to improve the throughput.

Additionally, as described in Example 4, radio base station 10 maps the reference signals specific to respective user terminals 20 in a comb fashion for the physical control channels and also maps the reference signals specific to respective user terminals 20 in a comb fashion for the physical data channels, so that it is possible to assign specific antenna ports to respective user terminals 20. It is also possible to reduce the overhead due to the reference signal so as to improve the throughput.

### <Method of Determining CP Length>

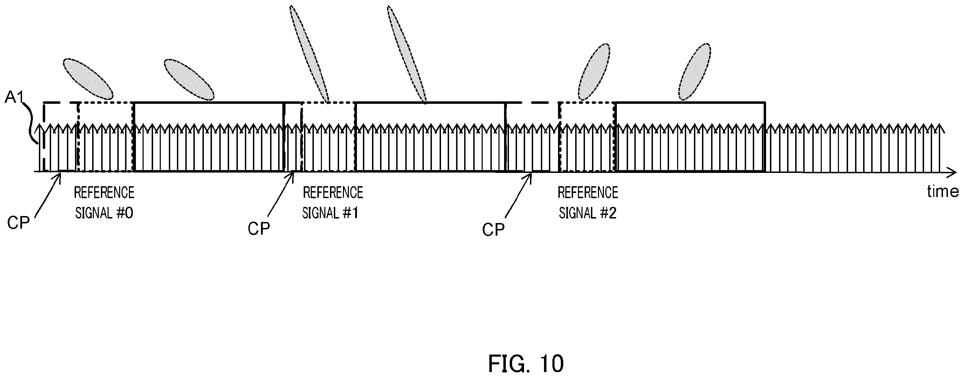

Note that, the length of the guard interval, such as Cyclic Prefix (CP) or the like applied to the reference signal may be variable in the present embodiment as illustrated in FIG. 10. For example, the CP length is shortened in such cases as those where the delay spread is small, the beam is thin, the received power is small, and the like.

The CP length is indicated from radio base station 10 to user terminal 20 by the DCI of the physical control channel. User terminal 20 monitors the physical control channel to detect the CP length in the DCI. Note that, zero padding, a known sequence (Unique Word), or the like may also be used as the guard interval.

The embodiments of the invention have been described above.

### (Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

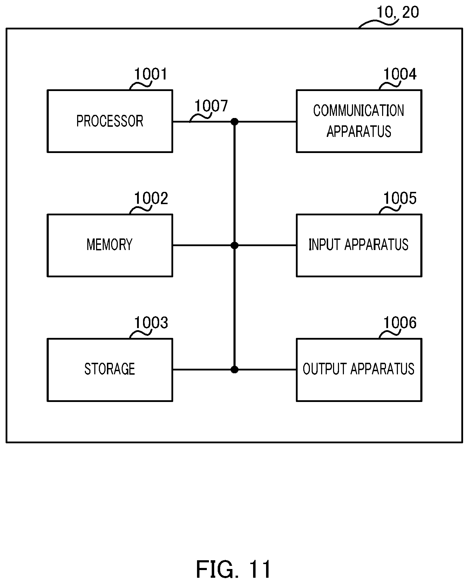

For example, the radio base station, the user terminal, and the like according to an embodiment of the present invention may function as a computer that executes processing of a radio communication method of the present invention. FIG. 11 illustrates an example of a hardware configuration of the radio base station and the user terminal according to an embodiment of the present invention. Radio base station 10 and user terminal 20 as described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of radio base station 10 and of user terminal 20 may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in radio base station 10 and user terminal 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, scheduler 101, transmission signal generator 102 and 206, coding and modulation section 103 and 207, mapper 104 and 208, controller 108 and 203, channel estimator 109 and 204, demodulation and decoding section 110and 205, and the like as described above may be implemented by processor 1001.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, scheduler 101 of radio base station 10 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called a register, a cache, a main memory (main storage apparatus), or the like. Memory 1002 can save a program (program code), a software module, and the like that can be executed to carry out the radio communication method according to an embodiment of the present invention.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmitter 105 and 209, antennas 106 and 201, receiver 107 and 202, and the like as described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, radio base station 10 and user terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB) and System Information Block (SIB)), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station", "eNB", "cell", and "sector" can be interchangeably used in the present specification. The base station may be called a fixed station, a NodeB, an eNodeB (eNB), an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or a User Equipment (UE) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard.

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (Orthogonal Frequency Division Multiplexing (OFDM)) symbol, Single Carrier-Frequency Division Multiple Access (SC-FDMA) symbol, or the like) in the time domain.

The radio frame, the subframe, the slot, the mini slot, and the symbol indicate time units in transmitting signals. The radio frame, the subframe, the slot, the mini slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a Transmission Time Interval (TTI).

For example, one subframe, a plurality of continuous subframes, one slot may be called a TTI, or one mini slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one mini slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the number of mini slots included in the subframe, the numbers of symbols and resource blocks included in the slot, and the number of subcarriers included in the resource block can be changed in

When articles, such as "a," "an," and "the" in English, are added by translation in the entire disclosure, the articles include plural forms unless otherwise clearly indicated by the context.

The scope of the invention is solely limited by the appended claims.

### Industrial Applicability

An aspect of the present invention is useful for a mobile communication system. Reference Signs List

10 Radio base station
20 User terminal
101 Scheduler
102, 206 Transmission signal generation section
103, 207 Coding and modulation section
104, 208 Mapping section
105, 209 Transmission section
106, 201 Antenna
107, 202 Reception section
108, 203 Control section
109, 204 Channel estimation section
110, 205 Demodulation and decoding section

## Claims

1. A user terminal (20), comprising:
a reception section (202) that receives a downlink signal transmitted from a radio base station in a single carrier transmission system;
a channel estimation section (204) that performs channel estimation using a reference signal included in the downlink signal; and
a demodulation and decoding section (205) that demodulates and decodes a downlink control signal and a downlink data signal included in the downlink signal using a result of the channel estimation,
wherein a plurality of downlink control signals for a respective plurality of user terminals including the user terminal, a plurality of downlink data signals for the respective plurality of user terminals, a first reference signal referred to when the plurality of the downlink control signals are demodulated, and a second reference signal referred to when the plurality of the downlink data signals are demodulated are mapped in a time domain in the downlink signal,
wherein at least one of the first reference signal and the second reference signal is common to the plurality of user terminals, and
wherein the demodulation and decoding section
demodulates and decodes the downlink control signal addressed to the user terminal using a channel estimation result based on the first reference signal, and
demodulates and decodes the downlink data signal addressed to the user terminal using a channel estimation result based on the second reference signal and using the downlink control signal addressed to the user terminal;
wherein
the first reference signal that is specific to each of the plurality of user terminals, and the second reference signal that is common to the plurality of user terminals are mapped in the downlink signal, and
wherein the demodulation and decoding section
demodulates and decodes the downlink control signal addressed to the user terminal using the channel estimation result based on the first reference signal addressed to the user terminal, and
demodulates and decodes the downlink data signal addressed to the user terminal using the channel estimation result based on the common second reference signal but based not on a reference signal specific to the user terminal and using the downlink control signal addressed to the user terminal.

2. The user terminal according to claim 1, wherein
a plurality of the second reference signals are mapped at regular intervals in the downlink signal, and
the demodulation and decoding section demodulates and decodes the downlink data signal addressed to the user terminal using a channel estimation result based on at least one of the plurality of the second reference signals and using the downlink control signal addressed to the user terminal.

3. The user terminal according to claim 1, wherein
the first reference signal that is specific to each of the plurality of user terminals is multiplexed in a comb fashion in a frequency direction in the downlink signal, and
the demodulation and decoding section demodulates and decodes the downlink control signal addressed to the user terminal using the channel estimation result based on the first reference signal addressed to the user terminal.

4. The user terminal according to claim 1 or 3, wherein
the second reference signal that is specific to each of the plurality of user terminals is multiplexed in a comb fashion in a frequency direction in the downlink signal, and
the demodulation and decoding section demodulates and decodes the downlink data signal addressed to the user terminal using the channel estimation result based on the second reference signal addressed to the user terminal and using the downlink control signal addressed to the user terminal.

5. A radio communication method, comprising:
receiving a downlink signal transmitted from a radio base station in a single carrier transmission system;
performing channel estimation using a reference signal included in the downlink signal; and
demodulating and decoding a downlink control signal and a downlink data signal included in the downlink signal using a result of the channel estimation,
wherein a plurality of downlink control signals for a respective plurality of user terminals, a plurality of downlink data signals for the respective plurality of user terminals, a first reference signal referred to when the plurality of the downlink control signals are demodulated, and a second reference signal referred to when the plurality of the downlink data signals are demodulated are mapped in a time domain in the downlink signal,
at least one of the first reference signal and the second reference signal is common to the plurality of user terminals,
the downlink control signal addressed to a corresponding user terminal of the plurality of user terminals is demodulated and decoded using a channel estimation result based on the first reference signal,
the downlink data signal addressed to the corresponding user terminal is demodulated and decoded using a channel estimation result based on the second reference signal and using the downlink control signal addressed to the corresponding user terminal; and
wherein the first reference signal that is specific to each of the plurality of user terminals, and the second reference signal that is common to the plurality of user terminals are mapped in the downlink signal, and
further comprising
demodulating and decoding the downlink control signal addressed to the corresponding user terminal using the channel estimation result based on the first reference signal addressed to the corresponding user terminal, and
demodulating and decoding the downlink data signal addressed to the corresponding user terminal using the channel estimation result based on the common second reference signal but based not on a reference signal specific to the corresponding user terminal and using the downlink control signal addressed to the corresponding user terminal.

## Patentansprüche

1. Benutzerendgerät (20), umfassend:
einen Empfangsabschnitt (202), der ein Downlinksignal empfängt, das von einer Funkbasisstation in einem Einzelträgerübertragungssystem übertragen wird;
einen Kanalschätzungsabschnitt (204), der Kanalschätzung unter Verwendung eines Referenzsignals, das in dem Downlinksignal beinhaltet ist, durchführt; und
einen Demodulations- und Decodierungsabschnitt (205), der ein Downlinksteuersignal und ein Downlinkdatensignal, die in dem Downlinksignal beinhaltet sind, unter Verwendung eines Ergebnisses der Kanalschätzung demoduliert,
wobei eine Vielzahl von Downlinksteuersignalen für eine jeweilige Vielzahl von Benutzerendgeräten, die das Benutzerendgerät beinhaltet, eine Vielzahl von Downlinkdatensignalen für die jeweilige Vielzahl von Benutzerendgeräten, ein erstes Referenzsignal, auf das sich bezogen wird, wenn die Vielzahl von Downlinksteuersignalen demoduliert wird, und ein zweites Referenzsignal, auf das sich bezogen wird, wenn die Vielzahl der Downlinkdatensignale demoduliert wird, in einer Zeitdomäne in dem Downlinksignal abgebildet werden,
wobei die Vielzahl von Benutzerendgeräten zumindest eines des ersten Referenzsignals und des zweiten Referenzsignals gemeinsam haben, und
wobei der Demodulations- und Decodierungsabschnitt
das Downlinksteuersignal, das an das Benutzerendgerät adressiert ist, unter Verwendung eines Kanalschätzungsergebnisses auf Basis des ersten Referenzsignals demoduliert und decodiert, und
das Downlinkdatensignal, das an das Benutzerendgerät adressiert ist, unter Verwendung eines Kanalschätzungsergebnisses auf Basis des zweiten Referenzsignals und unter Verwendung des Downlinksteuersignals, das an das Benutzerendgerät adressiert ist, demoduliert und decodiert;
wobei
das erste Referenzsignal, das für jedes der Vielzahl von Benutzerendgeräten spezifisch ist, und das zweite Referenzsignal, das die Vielzahl von Benutzerendgeräten gemeinsam haben, in dem Downlinksignal abgebildet sind, und
wobei der Demodulations- und Decodierungsabschnitt
das Downlinksteuersignal, das an das Benutzerendgerät adressiert ist, unter Verwendung des Kanalschätzungsergebnisses auf Basis des ersten Referenzsignals, das an das Benutzerendgerät adressiert ist, demoduliert und decodiert, und
das Downlinkdatensignal, das an das Benutzerendgerät adressiert ist, unter Verwendung des Kanalschätzungsergebnisses auf Basis des gemeinsamen zweiten Referenzsignals, aber nicht auf Basis eines Referenzsignals, das spezifisch für das Benutzerendgerät ist, und unter Verwendung des Downlinksteuersignals, das an das Benutzerendgerät adressiert ist, demoduliert und decodiert.

2. Benutzerendgerät nach Anspruch 1, wobei
eine Vielzahl der zweiten Referenzsignale bei regelmäßigen Intervallen in dem Downlinksignal abgebildet wird, und
der Demodulations- und Decodierungsabschnitt das Downlinkdatensignal, das an das Benutzerendgerät adressiert ist, unter Verwendung eines Kanalschätzungsergebnisses auf Basis zumindest eines der Vielzahl der zweiten Referenzsignale und unter Verwendung des Downlinksteuersignals, das an das Benutzerendgerät adressiert ist, demoduliert und decodiert.

3. Benutzerendgerät nach Anspruch 1, wobei
das erste Referenzsignal, das spezifisch für jedes der Vielzahl von Benutzerendgeräten ist, auf eine Kammweise in einer Frequenzrichtung in dem Downlinksignal gemultiplext wird, und
der Demodulations- und Decodierungsabschnitt das Downlinksteuersignal, das an das Benutzerendgerät adressiert ist, unter Verwendung des Kanalschätzungsergebnisses auf Basis des ersten Referenzsignals, das an das Benutzerendgerät adressiert ist, demoduliert und decodiert.

4. Benutzerendgerät nach Anspruch 1 oder 3, wobei
das zweite Referenzsignal, das für jedes der Vielzahl von Benutzerendgeräten spezifisch ist, auf eine Kammweise in einer Frequenzrichtung in dem Downlinksignal gemultiplext wird, und
der Demodulations- und Decodierungsabschnitt das Downlinkdatensignal, das an das Benutzerendgerät adressiert ist, unter Verwendung des Kanalschätzungsergebnisses auf Basis des zweiten Referenzsignals, das an das Benutzerendgerät adressiert ist, und unter Verwendung des Downlinksteuersignals, das an das Benutzerendgerät adressiert ist, demoduliert und decodiert.

5. Funkkommunikationsverfahren, umfassend:
Empfangen eines Downlinksignals, das von einer Funkbasisstation in einem Einzelträgerübertragungssystem übertragen wird;
Durchführen von Kanalschätzung unter Verwendung eines Referenzsignals, das in dem Downlinksignal beinhaltet ist; und
Demodulieren und Decodieren eines Downlinksteuersignals und eines Downlinkdatensignals, die in dem Downlinksignal beinhaltet sind, unter Verwendung eines Ergebnisses der Kanalschätzung,
wobei eine Vielzahl von Downlinksteuersignalen für eine jeweilige Vielzahl von Benutzerendgeräten, eine Vielzahl von Downlinkdatensignalen für die jeweilige Vielzahl von Benutzerendgeräten, ein erstes Referenzsignal, auf das sich bezogen wird, wenn die Vielzahl der Downlinksteuersignale demoduliert wird, und ein zweites Referenzsignal, auf das sich bezogen wird, wenn die Vielzahl der Downlinkdatensignale demoduliert wird, in einer Zeitdomäne in dem Downlinksignal abgebildet werden,
die Vielzahl von Benutzerendgeräten zumindest eines des ersten Referenzsignals und des zweiten Referenzsignals gemeinsam haben,
das Downlinksteuersignal, das an ein entsprechendes Benutzerendgerät der Vielzahl von Benutzerendgeräten adressiert ist, unter Verwendung eines Kanalschätzungsergebnisses auf Basis des ersten Referenzsignals demoduliert und decodiert wird,
das Downlinkdatensignal, das an das entsprechende Benutzerendgerät adressiert ist, unter Verwendung eines Kanalschätzungsergebnisses auf Basis des zweiten Referenzsignals und unter Verwendung des Downlinksteuersignals, das an das entsprechende Benutzerendgerät adressiert ist, demoduliert und decodiert wird; und
wobei das erste Referenzsignal, das für jedes der Vielzahl von Benutzerendgeräten spezifisch ist, und das zweite Referenzsignal, das die Vielzahl von Benutzerendgeräten gemeinsam haben, in dem Downlinksignal abgebildet sind, und
weiter umfassend:
Demodulieren und Decodieren des Downlinksteuersignals, das an das entsprechende Benutzerendgerät adressiert ist, unter Verwendung des Kanalschätzungsergebnisses auf Basis des ersten Referenzsignals, das an das entsprechende Benutzerendgerät adressiert ist, und
Demodulieren und Decodieren des Downlinkdatensignals, das an das entsprechende Benutzerendgerät adressiert ist, unter Verwendung des Kanalschätzungsergebnisses auf Basis des gemeinsamen zweiten Referenzsignals, aber nicht auf Basis eines Referenzsignals, das für das entsprechende Benutzerendgerät spezifisch ist, und unter Verwendung des Downlinksteuersignals, das an das entsprechende Benutzerendgerät adressiert ist.

## Revendications

1. Terminal utilisateur (20) comprenant :
une section de réception (202) qui reçoit un signal en liaison descendante émis à partir d'une station de base radio dans un système de transmission à porteuse unique ;
une section d'estimation de canal (204) qui réalise une estimation de canal au moyen d'un signal de référence inclus dans le signal en liaison descendante ; et
une section de démodulation et de décodage (205) qui démodule et décode un signal de commande en liaison descendante et un signal de données en liaison descendante inclus dans le signal en liaison descendante au moyen d'un résultat de l'estimation de canal,
une pluralité de signaux de commande en liaison descendante pour une pluralité respective de terminaux utilisateurs incluant le terminal utilisateur, une pluralité de signaux de données en liaison descendante pour la pluralité respective de terminaux utilisateurs, un premier signal de référence auquel il est fait référence quand la pluralité de signaux de commande en liaison descendante sont démodulés, et un second signal de référence auquel il est fait référence quand la pluralité de signaux de données en liaison descendante sont démodulés sont mappés dans un domaine temporel dans le signal en liaison descendante,
dans lequel au moins un du premier signal de référence et du second signal de référence est commun à la pluralité de terminaux utilisateurs, et
dans lequel la section de démodulation et de décodage
démodule et décode le signal de commande en liaison descendante adressé au terminal utilisateur au moyen d'un résultat d'estimation de canal sur la base du premier signal de référence, et
démodule et décode le signal de données en liaison descendante adressé au terminal utilisateur au moyen d'un résultat d'estimation de canal sur la base du second signal de référence et au moyen du signal de commande en liaison descendante adressé au terminal utilisateur ;
dans lequel
le premier signal de référence qui est spécifique à chacun de la pluralité de terminaux utilisateurs et le second signal de référence qui est commun à la pluralité de terminaux utilisateurs sont mappés dans le signal en liaison descendante, et
dans lequel la section de démodulation et de décodage
démodule et décode le signal de commande en liaison descendante adressé au terminal utilisateur au moyen du résultat d'estimation de canal sur la base du premier signal de référence adressé au terminal utilisateur, et
démodule et décode le signal de données en liaison descendante adressé au terminal utilisateur au moyen du résultat d'estimation de canal sur la base du second signal de référence commun mais pas sur la base d'un signal de référence spécifique au terminal utilisateur et au moyen du signal de commande en liaison descendante adressé au terminal utilisateur.

2. Terminal utilisateur selon la revendication 1, dans lequel
une pluralité de seconds signaux de référence sont mappés à intervalles réguliers dans le signal en liaison descendante, et
la section de démodulation et de décodage démodule et décode le signal de données en liaison descendante adressé au terminal utilisateur au moyen d'un résultat d'estimation de canal sur la base d'au moins un de la pluralité des seconds signaux de référence et au moyen du signal de commande en liaison descendante adressé au terminal utilisateur.

3. Terminal utilisateur selon la revendication 1, dans lequel
le premier signal de référence qui est spécifique à chacun de la pluralité de terminaux utilisateurs est multiplexé en peigne dans une direction de fréquence dans le signal en liaison descendante, et
la section de démodulation et de décodage démodule et décode le signal de commande en liaison descendante adressé au terminal utilisateur au moyen du résultat d'estimation de canal sur la base du premier signal de référence adressé au terminal utilisateur.

4. Terminal utilisateur selon la revendication 1 ou 3, dans lequel
le second signal de référence qui est spécifique à chacun de la pluralité de terminaux utilisateurs est multiplexé en peigne dans une direction de fréquence dans le signal en liaison descendante, et
la section de démodulation et de décodage démodule et décode le signal de données en liaison descendante adressé au terminal utilisateur au moyen du résultat d'estimation de canal sur la base du second signal de référence adressé au terminal utilisateur et au moyen du signal de commande en liaison descendante adressé au terminal utilisateur.

5. Procédé de communication radio, comprenant :
la réception d'un signal en liaison descendante émis à partir d'une station de base radio dans un système de transmission à porteuse unique ;
la réalisation d'une estimation de canal au moyen d'un signal de référence inclus dans le signal en liaison descendante ; et
la démodulation et le décodage d'un signal de commande en liaison descendante et d'un signal de données en liaison descendante inclus dans le signal en liaison descendante au moyen d'un résultat de l'estimation de canal,
dans lequel une pluralité de signaux de commande en liaison descendante pour une pluralité respective de terminaux utilisateurs, une pluralité de signaux de données en liaison descendante pour la pluralité respective de terminaux utilisateurs, un premier signal de référence auquel il est fait référence quand la pluralité de signaux de commande en liaison descendante sont démodulés, et un second signal de référence auquel il est fait référence quand la pluralité de signaux de données en liaison descendante sont démodulés sont mappés dans un domaine temporel dans le signal en liaison descendante,
au moins un du premier signal de référence et du second signal de référence est commun à la pluralité de terminaux utilisateurs,
le signal de commande en liaison descendante adressé à un terminal utilisateur correspondant de la pluralité de terminaux utilisateurs est démodulé et décodé au moyen d'un résultat d'estimation de canal sur la base du premier signal de référence,
le signal de données en liaison descendante adressé au terminal utilisateur correspondant est démodulé et décodé au moyen d'un résultat d'estimation de canal sur la base du second signal de référence et au moyen du signal de commande en liaison descendante adressé au terminal utilisateur correspondant ; et
dans lequel le premier signal de référence qui est spécifique à chacun de la pluralité de terminaux utilisateurs et le second signal de référence qui est commun à la pluralité de terminaux utilisateurs sont mappés dans le signal en liaison descendante, et
comprenant en outre
la démodulation et le décodage du signal de commande en liaison descendante adressé au terminal utilisateur correspondant au moyen du résultat d'estimation de canal sur la base du premier signal de référence adressé au terminal utilisateur correspondant, et
la démodulation et le décodage du signal de données en liaison descendante adressé au terminal utilisateur correspondant au moyen du résultat d'estimation de canal sur la base du second signal de référence commun mais pas sur la base d'un signal de référence spécifique au terminal utilisateur correspondant et au moyen du signal de commande en liaison descendante adressé au terminal utilisateur correspondant.
